# EUROPÄISCHE PATENTSCHRIFT

(11) **EP 1 312 496 B1**
(45) Veröffentlichungstag und Bekanntmachung des Hinweises auf die Patenterteilung: **28.11.2007**
(21) Anmeldenummer: 02024233.5
(22) Anmeldetag: 31.10.2002
(51) Int. Cl.: B60J 7/00, B60J 7/04

(54) **Dachsystem für ein Fahrzeug**
Roofing system for vehicle
Système de toit pour véhicule

(30) Priorität: 16.11.2001 DE 10156102
(43) Veröffentlichungstag der Anmeldung: 21.05.2003
(73) Patentinhaber: Webasto Product International B.V., 2031 EB Haarlem (NL)
(72) Erfinder: de Waal, Martin Frank, 1521 XP Wormerveer (NL)
(74) Vertreter: Wiese, Gerhard

(56) Entgegenhaltungen:
- DE-A- 10 009 436
- DE-C- 19 701 211
- DE-C- 19 808 599
- FR-A- 2 726 512

## Beschreibung

Die Erfindung betrifft ein Fahrzeug mit einem Dachsystem mit wenigstens zwei in einem festen Fahrzeugdach angeordneten Deckeln und einem zwischen den Deckeln angeordneten Abschnitt des festen Fahrzeugdaches gemäß dem Oberbegriff des Patentanspruchs 1.

Aus der DE 41 29 850 A1 ist ein Fahrzeugdach mit zwei voneinander beanstandeten Deckeln bekannt, zwischen denen ein Abschnitt des festen Fahrzeugdaches angeordnet ist. In diesem Abschnitt ist dort zusätzlich eine feste Glasscheibe angeordnet. Zwischen den Deckeln und der festen Glasscheibe sind jeweils schmale Bereiche des festen Fahrzeugdaches sichtbar, so dass das Fahrzeugdach insgesamt einen optisch sehr zerklüfteten Eindruck macht.

Es sind weiterhin beispielsweise aus der FR-A-2 726 512 Großdach-Lösungen bekannt, bei denen in eine einzige große Dachöffnung ein durchgehender Rahmen mit mehreren hintereinander angeordneten Deckelelementen eingebaut ist. Derartige Großdach-Lösungen sind optisch äußerst ansprechend, andererseits jedoch auch äußerst kostspielig und daher nur für den Serieneinbau in die Rohkarosserie geeignet.

Der vorliegenden Erfindung liegt die Aufgabe zu Grunde, ein Fahrzeug mit einem mehrere Dachteile umfassenden Dachsystem zu schaffen, welches kostengünstig ist, für einen nachträglichen Einbau geeignet ist und dennoch einen ansprechenden optischen Gesamteindruck hinterlässt.

Diese Aufgabe wird durch die Merkmale des Patentanspruchs 1 gelöst. Vorteilhafte Ausgestaltungen der Erfindung sind den Unteransprüchen zu entnehmen.

Durch das Einfügen einer Abdeckung, die unmittelbar an die benachbarten Deckel angrenzt und deren Oberfläche optisch an die Oberfläche der Deckel angepasst ist, können zwei oder auch mehrere kostengünstige, für den nachträglichen Einbau geeignete öffnungsfähige Fahrzeugdächer verwendet werden, welche in Verbindung mit der Abdeckung ein optisch ansprechendes Dachsystem bilden. Erfindungsgemäß verläuft unter dem zwischen den Deckeln liegenden Abschnitt des festen Fahrzeugdaches ein Querspriegel zur Versteifung des Daches. Der Vorteil des erfindungsgemäßen Dachsystems liegt gerade darin, das die vorgegebene Struktur von Querspriegeln des Fahrzeugs nicht angetastet wird, da Nachrüstdächer solcher Größe verwendet werden können, die in die Zwischenräume zwischen den Querspriegeln hinein passen. Dadurch wird die Stabilität des Fahrzeugdaches bei Verwendung des erfindungsgemäßen Dachsystems nicht beeinträchtigt. Die Dicke der als Folie ausgebildeten Abdeckung ist so gewählt, dass sie nach dem Einbau der Deckel mit deren Oberfläche eine bündige Ausrichtung hat. Dadurch ergibt sich der Vorteil reduzierter Fahrtwindgeräusche

Da die Größe der Abdeckung variabel ist, lässt sich das Dachsystem unter Verwendung einer oder mehrerer Standardgrößen von nachträglichen Einbaudächem in einfacher Weise an unterschiedliche Fahrzeuge anpassen, auch wenn diese unterschiedliche Abstände von Querspriegeln aufweisen.

Besonders vorteilhaft ist es, wenn die Folie in einfacher Weise als Abdeckung auf den Abschnitt des festen Fahrzeugdaches zwischen den Deckeln aufgeklebt werden kann.

Wenn zumindest einer der Deckel und/oder die Abdeckung mit Solarzellen versehen ist, lässt sich eine kostengünstige Auflademöglichkeit für eine Fahrzeugbatterie und/oder ein Standlüftungs-Betrieb eines fahrzeugeigenen Lüfters oder einen bzw. mehrerer im Bereich der Deckel angeordnete Lüfter realisieren. Mit Solarzellen versehene Folien zur Aufbringung aufs Bootsdecks oder Wohnmobile sind kostengünstig am Markt erhältlich und somit zur Verwendung als Abdeckung geeignet.

Besonders vorteilhaft ist es, wenn zumindest einer der Deckel mit seiner Hinterkante über das feste Fahrzeugdach ausstellbar und nach hinten verschiebbar ist. Durch den zwischen beiden Deckeln angeordneten, die Abdeckung umfassenden Abschnitt des festen Fahrzeugdaches sind die Deckel weit genug voneinander beanstandet, so dass sie auch bei einer unabhängigen Ansteuerung mittels eines elektrischen Antriebes nicht miteinander kollidieren können. Somit muss nicht wie bei Großdachsystemen ein zusätzliches gemeinsames Steuergerät vorgesehen werden, welches die Bewegungen der einzelnen Deckel koordiniert.

Nachfolgend ist ein Ausführungsbeispiel der Erfindung anhand der Zeichnung beschrieben. Es zeigt:
- Figur 1: eine schematische perspektivische Ansicht eines Dachsystems,
- Figur 2: eine Draufsicht auf ein mit Solarzellen versehenes Dachsystem, und

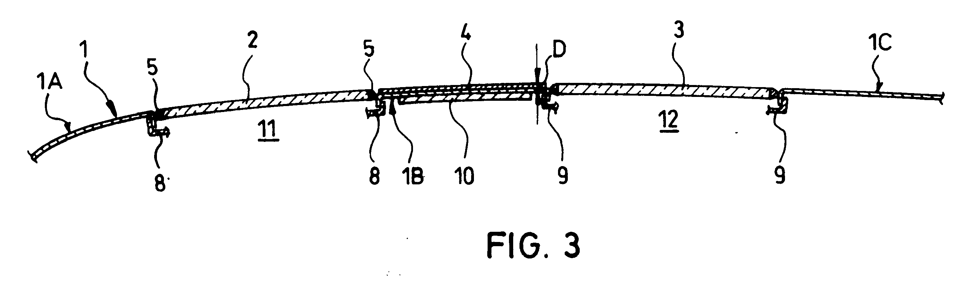

- Figur 3: einen Längsschnitt durch das Dachsystem gemäß Figur 1.

Das erfindungsgemäße Fahrzeug mit einem Dachsystem wird gebildet von einem festen Fahrzeugdach 1, das einen vorderen Abschnitt 1A, einen mittleren Abschnitt 1 B einen hinteren Abschnitt 1C aufweist. Zwischen dem vorderen Abschnitt 1A und dem mittleren Abschnitt 1 B ist eine erste Dachöffnung 11 angeordnet, die mittels eines Deckels 2 wahlweise verschließbar oder wenigstens teilweise zu öffnen ist. Zwischen dem mittleren Abschnitt 1B und dem hinteren Abschnitt 1C ist eine zweite Dachöffnung 12 angeordnet, die mittels eines Deckels 3 wahlweise verschließbar oder wenigstens teilweise zu öffnen ist.

Der Deckel 2 ist an einem Rahmen 8 gelagert, der am Rand der Dachöffnung 11 angeordnet und mit dem festen Fahrzeugdach 1 verbunden ist. Der Deckel 3 ist an einem Rahmen 9 gelagert, der am Rand der Dachöffnung 12 angeordnet und mit dem festen Fahrzeugdach 1 verbunden ist.

Die Deckel 2 und 3 sind bevorzugt aus einem transparenten Material, wie Glas hergestellt. Zwischen den Deckeln 2 und 3 ist eine Abdeckung 4 vorgesehen, die bevorzugt als Folie ausgebildet ist und sich nahtlos und bündig zwischen die Deckel 2 und 3 einfügt. Die Dicke D der Abdeckung 4 ist dabei so gewählt, dass die Abdeckung 4 nach Montage der Deckel 2 und 3 bündig mit deren Oberfläche liegt. Die Abdeckung 4 ist bevorzugt auf den mittleren Abschnitt 1 B des festen Fahrzeugdaches 1 aufgeklebt.

Die Abdeckung 4 ist optisch mit ihrer Oberfläche an die Oberfläche der Deckel 2 und 3 angepasst. Sofern die Deckel 2 und 3 aus getöntem Glas bestehen, ist die Abdeckung 4 von einer entsprechend getönten Folie gebildet. An den Deckeln 2 und 3 ausgebildete Randbereiche 5 bzw. 6, in denen beispielsweise die Deckel umgebende Dichtungen angeordnet sind, werden optisch auch im seitlichen Bereich der Abdeckung 4 als Randbereich 7 fortgeführt.

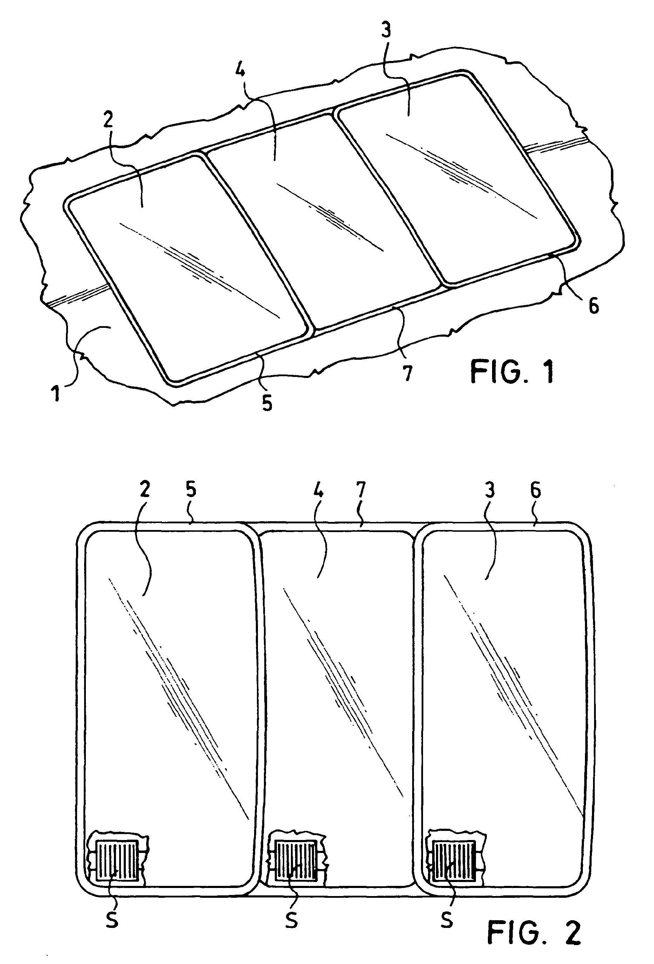

In Figur 2 ist eine Variante dargestellt, bei der sowohl die Deckel 2 und 3 als auch die Abdeckung 4 mit Solarzellen S bestückt sind. Da mit Solarzellen bestückte Glasdeckel relativ teuer sind, ist auch eine Variante denkbar, bei der nur die Abdeckung 4 beispielsweise in Form einer Folie mit Solarzellen bestückt ist. Derartige Folien sind relativ kostengünstig für Nachrüstzwecke aufs Bootsdecks oder Wohnmobilen erhältlich. Die Solarzellen S können mit ihren nicht gezeigten elektrischen Anschlüssen entweder eine Fahrzeugbatterie angeschlossen sein und zu deren Nachladung dienen, oder alternativ dazu den fahrzeugeigenen Lüfter oder einen im Bereich der Deckel 2 und 3 angeordnete Lüfter zur Standentlüftung betreiben. Zur Anpassung der Folie an die Oberfläche der Deckel 2 und 3 kann diese entweder eingefärbt, lackiert oder mit einer zusätzlichen farblich abgestimmten Folie versehen sein, die an der Unterseite oder der Oberseite der als Abdeckung 4 liegenden Folie angeordnet ist.

### Bezugszeichenliste

- 1: Fahrzeugdach
- 1 A: vorderer Abschnitt (von 1)
- 1 B: mittlerer Abschnitt (von 1)
- 1 C: hinterer Abschnitt (von 1)
- 2: Deckel
- 3: Deckel
- 4: Abdeckung
- 5: Randbereich (von 2)
- 6: Randbereich (von 3)
- 7: Randbereich (von 4)
- 8: Rahmen (von 2)
- 9: Rahmen (von 3)
- 10: Querspriegel
- 11: (vordere) Dachöffnung
- 12: (hintere) Dachöffnung

## Patentansprüche

1. Fahrzeug mit einem Dachsystem mit wenigstens zwei in einem festen Fahrzeugdach (1) angeordneten aus Glas gebildeten Deckeln (2, 3) und einem zwischen den Deckeln (2, 3) angeordneten Abschnitt (1 B) des festen Fahrzeugdaches (1), wobei
- unterhalb des Abschnitts (1 B) ein Querspriegel (10) des festen Fahrzeugdaches (1) angeordnet ist,
- auf dem Abschnitt (1 B) zwischen den Deckeln (2, 3) auf dem festen Fahrzeugdach (1) eine Abdeckung (4) angeordnet ist, die in ihrer Oberflächengestaltung an die Oberfläche der Deckel (2, 3) angepasst ist und wobei
- die Dicke (D) der Abdeckung (4) so bemessen ist, dass deren Oberfläche im eingebauten Zustand bündig zur Oberfläche der Deckel (2, 3) angeordnet ist, **dadurch gekennzeichnet, dass** die Abdeckung (4) durch eine Folie gebildet wird.

2. Fahrzeug mit einem Dachsystem nach Anspruch 1, **dadurch gekennzeichnet, dass** zumindest einer der Deckel (2, 3) und/oder die Abdeckung (4) mit Solarzellen (S) versehen ist.

3. Fahrzeug mit einem Dachsystem nach einem der vorhergehenden Ansprüche, **dadurch gekennzeichnet, dass** zumindest einer der Deckel (2, 3) mit seiner Hinterkante über das feste Fahrzeugdach (1) ausstellbar und nach hinten verschiebbar ist.

4. Fahrzeug mit einem Dachsystem nach einem der vorhergehenden Ansprüche, **dadurch gekennzeichnet, dass** die Größe der Abdeckung (4) variabel ist, so dass das Dachsystem unter Verwendung einer oder mehrerer Standardgrößen von Deckeln (2, 3) von nachträglichen Einbaudächem in einfacher Weise an unterschiedliche Fahrzeuge anpassbar ist.

5. Fahrzeugdach mit einem Dachsystem nach einem der vorhergehenden Ausprüche, **dadurch gekennzeichnet, dass** die Folie auf den Abschnitt (1B) des festen Fahrzeugdachs (1) aufgeklebt ist.

## Claims

1. Vehicle having a roof system with at least two panels (2, 3) formed of glass and arranged in a fixed vehicle roof (1), and a section (1 B) of the fixed vehicle roof (1) that is arranged between the panels (2, 3),
- a transverse brace (10) of the fixed vehicle roof (1) being arranged underneath the section (1 B),
- a covering (4) being arranged on the fixed vehicle roof (1) on the section (1 B) between the panels (2, 3), its surface configuration being matched to the surface of the panels (2, 3),
- and the thickness (D) of the covering (4) being dimensioned such that, in the installed state, its surface is arranged flush with the surface of the panels (2, 3),
**characterized in that** the covering (4) is formed by a film.

2. Vehicle having a roof system according to Claim 1, **characterized in that** at least one of the panels (2, 3) and/or the covering (4) is provided with solar cells (S).

3. Vehicle having a roof system according to one of the preceding claims, **characterized in that** at least one of the panels (2, 3) can be raised with its rear edge above the fixed vehicle roof (1) and displaced rearwards.

4. Vehicle having a roof system according to one of the preceding claims, **characterized in that** the size of the covering (4) is variable, so that the roof system can be adapted to different vehicles in a straightforward manner by using one or more standard sizes of panels (2, 3) of subsequently installed roofs.

5. Vehicle roof having a roof system according to one of the preceding claims, **characterized in that** the film is adhesively bonded onto the section (1 B) of the fixed vehicle roof (1).

## Revendications

1. Véhicule avec un système de toit avec au moins deux couvercles (2, 3) formés de verre disposés dans un toit de véhicule (1) en dur et avec un tronçon (1B) du toit de véhicule (1) en dur disposé entre les couvercles (2, 3), dans lequel
en-dessous du tronçon (1B) est disposé un arceau transversal (10) du toit de véhicule (1) en dur,
sur le tronçon (1B) entre les couvercles (2, 3) sur le toit de véhicule (1) en dur est disposé un recouvrement (4) qui est adapté dans son aménagement de surface à la surface des couvercles (2, 3), et dans lequel
l'épaisseur (D) du recouvrement (4) est dimensionnée de telle sorte que dans l'état monté, sa surface est disposée à fleur de la surface des couvercles (2, 3), **caractérisé en ce que** le recouvrement (4) est formé par un film.

2. Véhicule avec un système de toit selon la revendication 1, **caractérisé en ce qu'**au moins un des couvercles (2, 3) et/ou le recouvrement (4) sont dotés de cellules photovoltaïques.

3. Véhicule avec un système de toit selon l'une quelconque des revendications précédentes, **caractérisé en ce qu'**avec son bord arrière, au moins un des couvercles (2, 3) peut être relevé au-dessus du toit de véhicule (1) en dur et peut être coulissé vers l'arrière.

4. Véhicule avec un système de toit selon l'une quelconque des revendications précédentes, **caractérisé en ce que** la taille du recouvrement (4) est variable, de telle sorte que le système de toit est adaptable de façon simple à différents véhicules moyennant l'utilisation d'une ou de plusieurs tailles standard de couvercles (2, 3) de toits à monter ultérieurement.

5. Véhicule avec un système de toit selon l'une quelconque des revendications précédentes, **caractérisé en ce que** le film est collé sur le tronçon (1B) du toit de véhicule (1) en dur.
